# EUROPEAN PATENT SPECIFICATION

(11) **EP 2 514 727 B1**
(45) Date of publication and mention of the grant of the patent: **13.11.2019**
(21) Application number: 12397511.2
(22) Date of filing: 28.03.2012
(51) Int. Cl.: C04B 14/26, C04B 28/04, C04B 28/08, C04B 40/00

(54) **AN ALKALI ACTIVATED LIMESTONE CONCRETE COMPOSITION AND USE OF COMPOSITION IN CONCRETE CASTING**
ALKALIAKTIVIERTE KALKSTEINBETONZUSAMMENSETZUNG UND VERWENDUNG DER ZUSAMMENSETZUNG BEIM BETONGIESSEN
COMPOSITION DE BÉTON DE CALCAIRE ACTIVÉ PAR UN ALCALI ET UTILISATION DE LA COMPOSITION DANS LE COULAGE DE BÉTON

(30) Priority: 20.04.2011 FI 20115387
(43) Date of publication of application: 24.10.2012
(73) Proprietor: Consolis Oy Ab, 03100 Nummela (FI)
(72) Inventor: Cwirzen, Andrzej, 02280 Espoo (FI)
(74) Representative: Seppo Laine Oy

(56) References cited:
- SAKULICH A R ET AL: "Mechanical and microstructural characterization of an alkali-activated slag/limestone fine aggregate concrete", CONSTRUCTION AND BUILDING MATERIALS, ELSEVIER, NETHERLANDS, vol. 23, no. 8, 1 August 2009 (2009-08-01) , pages 2951-2957, XP026158913, ISSN: 0950-0618, DOI: 10.1016/J.CONBUILDMAT.2009.02.022 [retrieved on 2009-03-14]
- YIP C K ET AL: "Carbonate mineral addition to metakaolin-based geopolymers", CEMENT AND CONCRETE COMPOSITES, ELSEVIER APPLIED SCIENCE, BARKING, GB, vol. 30, no. 10, 1 November 2008 (2008-11-01), pages 979-985, XP025669600, ISSN: 0958-9465, DOI: 10.1016/J.CEMCONCOMP.2008.07.004 [retrieved on 2008-07-25]
- ZONGSHOU LIN ET AL: "Strength of limestone-based non-calcined cement and its properties", WUHAN UNIVERSITY OF TECHNOLOGY. JOURNAL (MATERIAL SCIENCE EDITION), vol. 24, no. 3, 1 June 2009 (2009-06-01), pages 471-475, XP055316686, CN ISSN: 1000-2413, DOI: 10.1007/s11595-009-3471-8
- E. Douglas ET AL: "Alkali activated ground granulated blast-furnace slag concrete: Preliminary investigation", CEMENT AND CONCRETE RESEARCH., vol. 21, no. 1, 1 January 1991 (1991-01-01), pages 101-108, XP055440775, US ISSN: 0008-8846, DOI: 10.1016/0008-8846(91)90036-H
- C. Shi ET AL: "Alkaline activators" In: "Alkali-Activated Cements and Concretes", 31 December 2006 (2006-12-31), Taylor-Francis, US, XP055440930, ISBN: 978-0-415-70004-7 page 6,

## Description

### Field of the invention

The invention relates to the field of concrete compositions. Particularly, the invention concerns an alkali activated limestone concrete composition and use of this composition in concrete casting.

### Background of the invention

Alkali activated concrete, also called geopolymer concrete, comprises coarse aggregates, sand, optionally fillers, water, chemical activator and binders like blast furnace slag, fly ash, metakaolin and Portland cement, which can be combined in different proportions. A chemical activator is added during mixing to promote the solidification process. Alkali activators in conventional use are alkaline compounds like carbonates, hydroxides and silicates, which can be added in aqueous solution or in dry form.

The main problem related to previously developed geopolymer concretes is availability of raw materials. Granulated blast furnace slag is widely used by the cement industry and its supply especially in Europe is very limited. Furthermore, due to the significant demand its price is rising continuously. Also the decrease of coal use in power plants will reduce the availability of fly ash. The use of fly ash in the production of concrete has been increased recently. The other problem of fly ash is variability of its morphology and chemical composition which causes problems to sustain designed properties of the produced concretes.

Use of Portland cement is problematic because it is manufactured by sintering raw materials, primary limestone, at 1450 °C. For each ton of ordinary Portland cement, approximately 800 kg of greenhouse gas is emitted into the atmosphere. This greenhouse gas is due to the fuel composition when heating the raw materials to high temperatures as well as to chemical reactions that take place during this heating e.g. decarbonation of limestone.

WO 2008048617 discloses a geopolymer-based concrete compound and a slag-based concrete compound. The geopolymer component includes a relatively large amount of amorphous silica and is mixed with an aggregate compound such as granite, limestone or sand. The manufacturing process of geopolymer-based concrete compounds uses alkali activation of amorphous silica and minimizes the need for lime and thus is an environmentally friendly process. The slag based concrete compound comprises slag and aggregate including limestone, granite and sand. It can also contain an activator like waterglass and natron for raising the pH of the compound. The invention reduces the use of Portland cement and CO₂ emission. In this invention limestone is used only as an aggregate.

SAKULICH, A. R. et al in "Mechanical and microstructural characterization of an alkali-activated slag/limestone fine aggregate concrete", CONSTRUCTION AND BUILDING MATERIALS, ELSEVIER, NETHERLANDS, vol. 23, no. 8, 1 August 2009, pages 2951-2957 are disclosing alkali-activated slag/fine limestone aggregate concrete. YIP, C. K. et al in "Carbonate mineral addition to metakaolin-based geopolymers", CEMENT AND CONCRETE COMPOSITES, ELSEVIER APPLIED SCIENCE, BARKING, GB, vol. 30, no. 10, 1 November 2008, pages 979-985 are disclosing carbonate mineral additions to metakaolin-based geopolymers. ZONGSHOU, L. & QIAN, Z. in "Strength of limestone-based non-calcined cement and its properties", WUHAN UNIVERSITY OF TECHNOLOGY. JOURNAL (MATERIAL SCIENCE EDITION), vol. 24, no. 3, 1 June 2009 (2009-06-01), pages 471-475 are disclosing a new type of cement prepared with ground limestone powder, blast-furnace slag, steel slag and gypsum without calcination. DOUGLAS, E. et al in "Alkali activated ground granulated blast-furnace slag concrete: Preliminary investigation", CEMENT AND CONCRETE RESEARCH, vol. 21, no. 1, 1 January 1991 (1991-01-01), pages 101-108 are disclosing the compressive strength development of alkali-activated ground blast-furnace slag concretes.

The development included in the present invention is primarily aiming to totally or partly replace Portland cement, fly ash and blast furnace slag with materials that are available in large amounts in nature and which do not necessarily need fabrication or preprocessing processes demanding high amounts of energy.

### Summary of the invention

The present invention is based on alkali activation processes and uses fine limestone or a combination of limestone and metakaolin or blast furnace slag as a binder. The chemical activators are composed of various combinations of alkali silicates, carbonates and oxides. To initiate and accelerate the solidification processes, additional heat treatment might be required for some mix compositions. The produced concrete is characterized by adequate mechanical properties and ultra low CO₂ emission.

According to one aspect of the invention there is provided an alkali activated limestone concrete composition, comprising a binder and an alkali activator, the content of limestone in the binder being 40-80 wt.-%, characterized in that the alkaline activator comprises potassium carbonate, calcium oxide, calcium hydroxide or any combination of these, and the diameter of the binder materials is in the range 5-100 µm. The binder can further comprise blast furnace slag, metakaolin, Portland cement or any combination of these. The binder can comprise at least one of the following in the indicated amounts: up to 60 wt -% of blast furnace slag, up to 50 wt -% of metakaolin and up to 30 wt % of Portland cement.

The alkali activator comprises potassium carbonate, calcium oxide, calcium hydroxide or any combination of these. The alkali activator can comprise at least one of the following in the indicated amounts: 4-15 wt-% of potassium carbonate, 5-30 wt-% of calcium oxide and 5-30 wt-% of calcium hydroxide, the weight percentages being relative to the binder excluding Portland cement. The present disclosure describes, but does not claim sodium silicate having a modulus of 0.3-2.5. The alkali activator can be added as anhydrous or as an aqueous solution.

In a further aspect of the invention there is provided the use of alkali activated limestone concrete in concrete casting. Alkali activated limestone concrete can be used in concrete casting in-situ or in casting precast concrete elements. Alkali activated concrete can be used as vibrated concrete, no-slump concrete or self compacting concrete (SCC).

### Brief description of the figures

The invention and its details will be described in more detail in the following, with reference to the enclosed drawings, wherein
Fig. 1 shows examples of the mixes, development of compressive strength of these mixes and other properties,
Fig. 2 shows the effect of various limestone concrete mixes on the strength,
Fig. 3 shows the effect of sodium silicate amounts on the mechanical properties of the concrete comprising limestone and metakaolin (not according to the invention),
Fig. 4 shows the effect of sodium silicate amounts on the mechanical properties of the concrete comprising limestone and blast furnace slag (not according to the invention),
Fig. 5 shows the effect of sodium silicate modulus on mechanical properties of the concrete comprising limestone and blast furnace slag (not according to the invention),
Fig. 6 shows the effect of sodium silicate modulus on mechanical properties of the concrete comprising limestone and metakaolin (not according to the invention),
Fig. 7 shows the effect of potassium carbonate amounts on the compressive strength values,
Fig. 8 shows the effect of sodium carbonate amounts on the compressive strength values (not according to the invention), and
Fig. 9 shows the effect of calcium oxide amounts on the compressive strength values.

### Detailed description of the invention

According to the invention an alkali-activated limestone concrete composition comprises a binder and an alkali activator, the content of limestone in the binder being 40-80 wt.-%, characterized in that the alkaline activator comprises potassium carbonate, calcium oxide, calcium hydroxide or any combination of these, and the diameter of the binder materials is in the range 5-100 µm. More preferably the content of limestone in the binder is 50-80 wt -%. Most preferably the content of limestone in the binder is 55-65 wt -%.This kind of concrete composition utilizes available and relatively low cost raw materials to produce competitive concrete with a very low carbon dioxide foot print.

The alkali activated limestone concrete can also comprise other binders like blast furnace slag, metakaolin and in some cases also Portland cement, which binders can be combined in different proportions. The alkali activated binders are based on chemical activation of raw materials which are not very reactive when mixed alone with water. When blast furnace slag, metakaolin or Portland cement in the binder is replaced with limestone, the CO₂ emission is ten times lower when compared to normal concretes. Reduction of the CO₂ emission is also achieved when only small amounts of blast furnace slag, metakaolin or Portland cement are combined with limestone in the binder.

Preferably the binder comprises at least one of the following in the indicated amounts: up to 60 wt -% of blast furnace slag, up to 50 wt -% of metakaolin and up to 30 wt % of Portland cement. More preferably the content of blast furnace slag is 10-50 wt-%, most preferably the content of blast furnace slag is 35-45 wt-%. More preferably the content of metakaolin is 10-50 wt-%, most preferably the content of metakaolin is 35-45 wt-%. More preferably the Portland cement content is 10-30 wt-%, most preferably the Portland cement content is 15-25 wt-%.

The chemical activation can be initiated by changing the pH of the solution to the level of at least 12. This can be done by incorporation of alkaline compounds e.g. carbonates, hydroxides or silicates into the water solution either alone or in combination. The most commonly used chemical activators are sodium silicate, sodium carbonate, potassium carbonate, calcium oxide or calcium hydroxide or any combination of these. Preferably the alkali activator comprises at least one of the following in the indicated anhydrous amounts: 4-15 wt-% of potassium carbonate, 5-30 wt-% of calcium oxide and 5-30 wt-% of calcium hydroxide, the weight percentages calculated from the weight of the binder excluding Portland cement. More preferably the content of potassium carbonate is 6-13 wt-%, most preferably the content of potassium carbonate is 7-12 wt-%. More preferably the content of calcium oxide is 10-20 wt-%, most preferably the content of calcium oxide is about 12-18 wt-%. More preferably the content of calcium hydroxide is 10-20 wt-%, most preferably the content of calcium hydroxide is 12-18 wt-%. In the following discussion, the alkali activators are anhydrous unless otherwise mentioned.

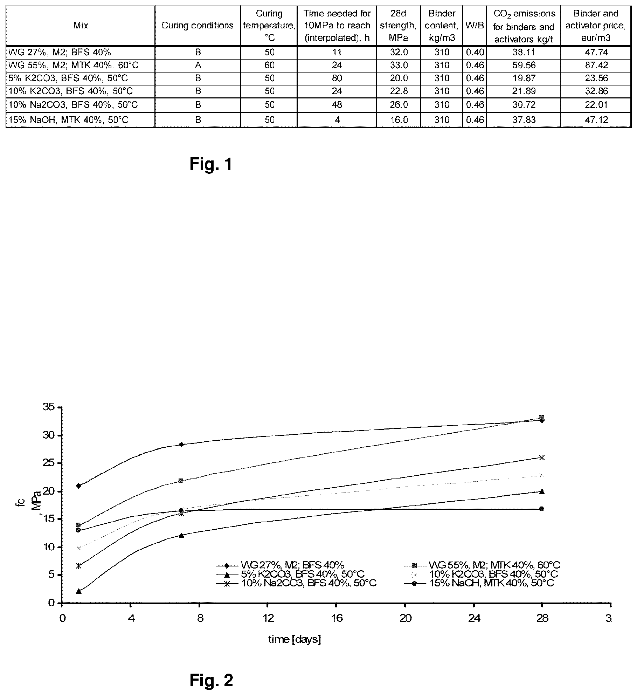

The table in fig. 1 shows examples of the concrete compositions comprising 60 wt-% of limestone and 40 wt-% of metakaolin (MTK) or blast furnace slag (BFS). These mixes were activated by one of the following: 27 or 55 wt-% of aqueous sodium silicate (waterglass WG, modulus M) which corresponds about 13.5 or 27.5 wt-% of anhydrous sodium silicate (not according to the invention), 5 or 10 wt-% of potassium carbonate, 10 wt-% of sodium carbonate (not according to the invention) or 15 wt-% of sodium hydroxide (not according to the invention). In fig. 1 A denotes wet curing conditions and B dry curing conditions. Fig. 1 also describes effects of the compressive strength of these mixes, amount of CO₂ emission and approximate price of the mixes. Fig. 2 shows the strength development of fig. 1 concrete mixes measured 1, 7 and 28 days after mixing.

Alkali activators can be incorporated as an aqueous solution or dry powder (anhydrous) or as a combination of both. Amounts of activators are calculated as dry content. Aqueous activator can be obtained as a ready product or by mixing water with dry activator. The total amount of water in the concrete composition is adjusted suitable taking into the account of the possible water amount of the alkali activator.

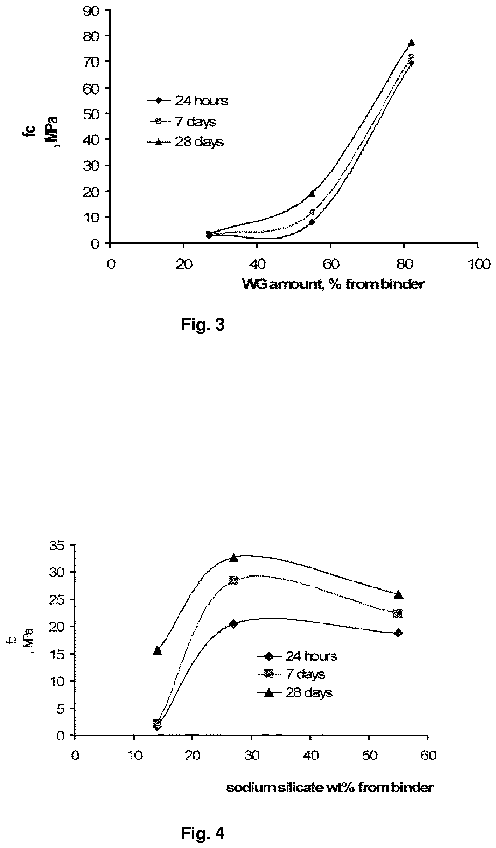

The amount of used sodium silicate has a strong effect on the mechanical properties of the produced concretes (not according to the invention). The optimum amount of sodium silicate is different for mixes containing metakaolin and for those containing blast furnace slag, which can be directly linked to differences in their chemical composition. Fig. 3 shows the effect of sodium silicate amounts on the mechanical properties of the concrete comprising 60 wt-% of limestone, 40 wt-% of metakaolin and aqueous sodium silicate (not according to the invention). It also describes that the usage of 80 wt-% of aqueous sodium silicate resulted in exceeding the strength of 70 MPa already after 24 hours when cured at 50 °C. Fig. 4 shows the effect of sodium silicate (not according to the invention) amounts on the mechanical properties of the concrete comprising 60 wt-% of limestone, 40 wt-% of blast furnace slag and aqueous sodium silicate in modulus 2.0 (SiO₂/Na₂O ratio).

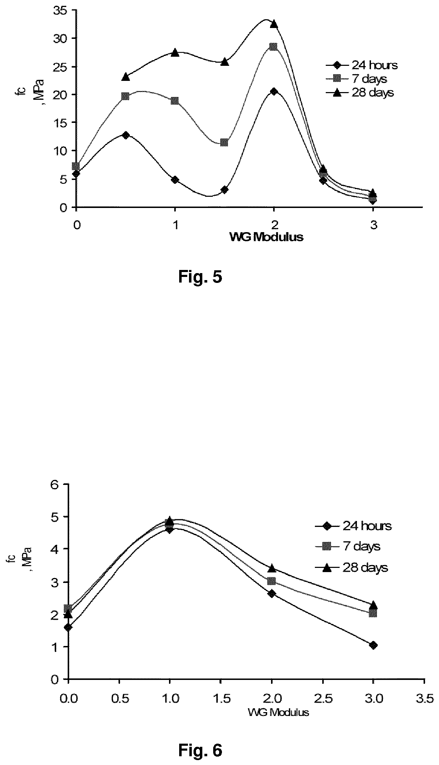

The concrete composition described, but not claimed can be additionally enhanced by adjusting the modulus of sodium silicate, combining this compound in certain proportions with carbonates, oxides and/or using dry sodium silicate. The modulus of sodium silicate is defined as SiO₂/Na₂O ratio. The preferable, but not claimed modulus is 0.3-2.5. The modulus of the used sodium silicate affects the mechanical properties of the produced concretes. The minimum modulus might change depending e.g. on the used proportions of the binder components. The optimum modulus is different for mixes containing limestone and blast furnace slag comparing to those composed of limestone and metakaolin. A preferable, but not claimed sodium silicate modulus for binder comprising limestone and blast furnace slag is 0.3-0.7 or 1.7-2.3, in respect of the mechanical properties, as shown in fig. 5. A more preferable, but not claimed sodium silicate modulus for binder comprising limestone and blast furnace slag is about 0.5 or about 2.0. A preferable, but not claimed sodium silicate modulus for binder comprising limestone and metakaolin is 0.5-1.5, as shown in fig. 6. A more preferable, but not claimed sodium silicate modulus for binder comprising limestone and metakaolin is about 1.0. All mixes shown in fig. 5 and fig. 6 (not according to the invention) were heat cured at 50 °C.

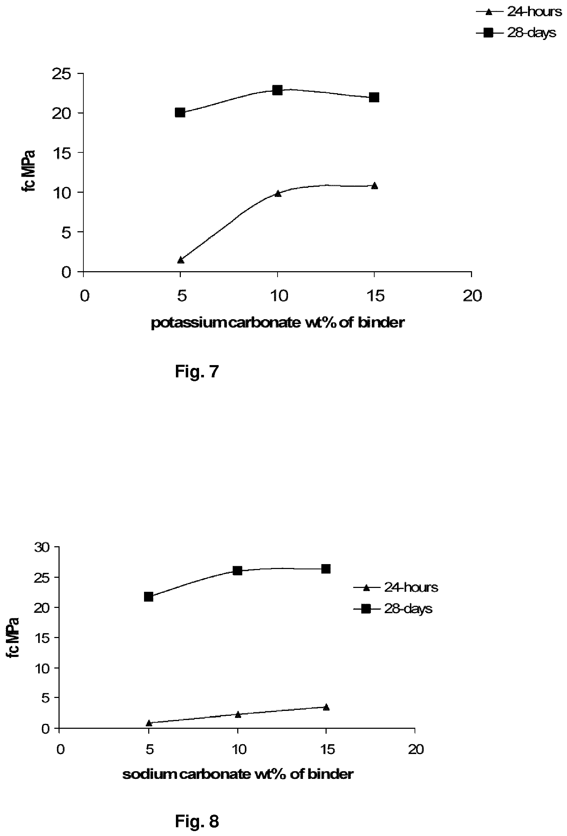

The effect of the amount of carbonates, either potassium or sodium carbonate, on the 28-day compressive strength value is relatively limited in the same curing conditions. The early strength is affected to a greater extent especially when potassium carbonate is used. The recommended amount of carbonates should be between 5 and 15 wt-% of the total binder amount. Fig. 7 shows the effect of potassium carbonate on the mechanical properties. Fig. 8 shows the effect of sodium carbonate on the mechanical properties (not according to the invention).

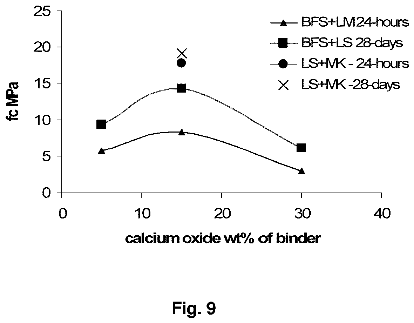

Calcium oxide can also be used as alkali activator. The maximum compressive strength is achieved by the amount of about 15 wt-% of the total binder. The mechanical properties are slightly better for this activator when using metakaolin as a secondary binder. The biggest benefit of this mix is its extremely low price in comparison with mixes using alkaline silicates and carbonates. The drawback is the required high curing temperatures of over 80 °C. Fig. 9 shows the effect of calcium oxide amounts on 1 and 28 days compressive strength values. All mixes containing blast furnace slag were heat cured at 50 °C while mixes containing metakaolin were heat cured at 80 °C.

The concrete material comprises coarse aggregates, sand, optional fillers, water, chemical activator and binder. Coarse aggregates usually have a diameter above 2 mm. Optional fillers are fine materials with diameters less than the sand particles and in some cases less than the cement particles in the mix. Aggregates and fillers are not reactive under normal conditions and mainly improve the packing density. A diameter of the binder materials is normally 5-100 µm, preferably a diameter of the binder materials is 5-50 µm, more preferably a diameter of the binder materials is 5-40 µm. The ratio of the binder in relation to the whole concrete amount affects the mechanical properties as well as the workability, e.g. in self compacting concrete more fine particles, including cement and fillers, can be used to improve the workability. Also the amount of activator in relation to binder has an effect on the cement because too small amounts will cause inferior mechanical properties both at an early stage and after complete solidification. Too high amounts will cause e.g. rapid setting, fast loss of workability and possible durability problems.

The mixing procedure starts with the mixing of dry aggregates, binders, possibly also some or all chemical activators. This mixing is followed by the addition of water optionally containing all or part of the chemical activators. The total mixing time is similar to that of regular concrete. The alkali activated concrete can be vibrated concrete, no-slump concrete, self compacting concrete, moist concrete, ground wet concrete or any other concrete which can be made according to this invention. These concretes can be used in casting made by extrusion, by slip forming, by casting in-situ or by any other suitable method. The alkali activated limestone concrete can be used in casting precast concrete elements or in concrete casting in-situ using ready mix concrete directly at the building site. An alkali activated limestone concrete composition according to the invention can be used in load bearing and non-load bearing structures for example in various applications including, but not limited to walls, statues, sculptures, monuments, consumer products like garden and landscaping products. All the developed concretes can be handled in a regular manner. After casting the elements can be covered and subjected to heat treatment. Heat treatment is not mandatory.

### Examples

The alkali activated concrete composition will now be illustrated with reference to the following examples. These examples are provided for illustration only and should not be considered limiting the invention in any way.

### Example 1 (not according to the invention)

186 kg/m³ (60 wt-%) of limestone having a diameter about 5-50 µm, 124 kg/m³ (40 wt-%) of blast furnace slag having surface area of around 400 m³/kg, 21 kg/m³ (7 wt-%) of aqueous sodium silicate with modulus 0.5, granite aggregates having maximum aggregate size of 12 mm, water 146 kg/m³, curing at 50 °C, having 1 day compressive strength 12.7 MPa and 28 day compressive strength 23 MPa.

### Example 2

186 kg/m³ (60 wt-%) of limestone having diameter about 5-50 µm, 124 kg/m³ (40 wt-%) of metakaolin having surface area of around 13000 m³/kg, 46 kg/m³ (15 wt-%) of slaked lime, granite aggregates having a maximum aggregate size of 12 mm, water 146 kg/m³, curing at 80 °C, having 1 day compressive strength 17.8 MPa and 28 day compressive strength 20 MPa.

### Example 3 (not according to the invention)

186 kg/m³ (60 wt-%) of limestone having a diameter about 5-50 µm, 124 kg/m³ (40 wt-%) of blast furnace slag having a surface area of around 400 m³/kg, 83 kg/m³ (27 wt-%) of aqueous sodium silicate with modulus 1.0, granite aggregates having a maximum aggregate size of 12 mm, water 146 kg/m3, curing at 50 °C, having 28 day compressive strength 32 MPa.

### Example 4 (not according to the invention)

60 wt-% of blast furnace slag, 40 wt-% of limestone activated by 27 wt-% of aqueous sodium silicate with modulus 2.0, having 28 day compressive strength 50.3 MPa.

### Example 5 (not according to the invention)

20 wt-% of Portland cement, 80 wt-% of limestone activated by 27 wt-% of aqueous sodium silicate with modulus 2.0, having 28 day compressive strength 11.6 MPa.

## Claims

1. An alkali activated limestone concrete composition, comprising a binder and an alkali activator, the content of limestone in the binder being 40-80 wt-%, **characterized in that** the alkali activator comprises potassium carbonate, calcium oxide, calcium hydroxide or any combination of these, and the diameter of the binder materials is in the range 5-100 µm.

2. An alkali activated limestone concrete composition according to claim 1, wherein the binder further comprises blast furnace slag, metakaolin, Portland cement or any combination of these.

3. An alkali activated limestone concrete composition according to claim 2, wherein the binder comprises at least one of the following in the indicated amounts:
up to 60 wt -% of blast furnace slag,
up to 50 wt -% of metakaolin and
up to 30 wt % of Portland cement.

4. An alkali activated limestone concrete composition according to any of the preceding claims , wherein the alkali activator comprises at least one of the following in the indicated amounts:
4-15 wt-% of potassium carbonate,
5-30 wt-% of calcium oxide and
5-30 wt-% of calcium hydroxide
the weight percentages being relative to the binder excluding Portland cement,

5. An alkali activated limestone concrete composition according to any of the preceding claims, wherein the alkali activator has been added as anhydrous.

6. An alkali activated limestone concrete composition according to any of the claims 1 to 4, wherein the alkali activator has been added as an aqueous solution.

7. Use of alkali activated limestone concrete composition according to any of the preceding claims in concrete casting.

8. Use of alkali activated limestone concrete composition according to any of claims 1 to 6 in concrete casting in-situ.

9. Use of alkali activated limestone concrete composition according to any of claims 1 to 6 in casting precast concrete elements.

10. Use of alkali activated limestone concrete composition according to any of claims 1 to 6 for making vibrated concrete, no-slump concrete or self-compacting concrete.

## Patentansprüche

1. Alkaliakivierte Kalksteinbetonzusammensetzung, umfassend ein Bindemittel und einen Alkaliaktivator, wobei der Kalksteingehalt im Bindemittel 40 bis 80 % beträgt, **dadurch gekennzeichnet, dass** der Alkaliakivator Kaliumcarbonat, Calciumoxid, Calciumhydroxid oder eine beliebige Kombination davon umfasst und der Durchmesser der Bindemittelmaterialien im Bereich von 5 bis 100 µm liegt.

2. Alkaliakivierte Kalksteinbetonzusammensetzung nach Anspruch 1, wobei das Bindemittel weiterhin Hochofenschlacke, Metakaolin, Portlandzement oder eine beliebige Kombination davon umfasst.

3. Alkaliaktivierte Kalksteinbetonzusammensetzung nach Anspruch 2, wobei das Bindemittel wenigstens eine der folgenden Mengen in den angegebenen Mengen umfasst:
bis zu 60 Gew.-% Hochofenschlacke,
bis zu 50 Gew.-% Metakaolin und
bis zu 30 Gew.-% Portlandzement.

4. Alkaliaktivierte Kalksteinbetonzusammensetzung nach einem der vorstehenden Ansprüche, wobei der Alkaliaktivator wenigstens eines der folgenden in den angegebenen Mengen umfasst:
4 bis 15 Gew.-% Kaliumcarbonat,
5 bis 30 Gew.-% Calciumoxid und
5 bis 30 Gew.-% Calciumhydroxid,
wobei die Gewichtsprozente sich auf das Bindemittel ohne Portlandzement beziehen.

5. Alkaliaktivierte Kalksteinbetonzusammensetzung nach einem der vorstehenden Ansprüche, wobei der Alkaliaktivator wasserfrei zugesetzt wurde.

6. Alkaliaktivierte Kalksteinbetonzusammensetzung nach einem der Ansprüche 1 bis 4, wobei der Alkaliaktivator als wässrige Lösung zugesetzt wurde.

7. Verwendung von alkaliaktivierter Kalksteinbetonzusammensetzung nach einem der vorstehenden Ansprüche beim Betongießen.

8. Verwendung von alkaliaktivierter Kalksteinbetonzusammensetzung nach einem der Ansprüche 1 bis 6 beim Betongießen in situ.

9. Verwendung von alkaliaktivierter Kalksteinbetonzusammensetzung nach einem der Ansprüche 1 bis 6 beim Gießen von Betonfertigteilen.

10. Verwendung von alkaliaktivierter Kalksteinbetonzusammensetzung nach einem der Ansprüche 1 bis 6 zum Herstellen von Rüttelbeton, nicht absinkendem Beton oder selbstverdichtendem Beton.

## Revendications

1. Composition de béton calcaire activé par un alcali, comprenant un liant et un activateur alcalin, la teneur en calcaire dans le liant étant de 40 à 80 % en poids, **caractérisée en ce que** l'activateur alcalin comprend du carbonate de potassium, de l'oxyde de calcium, de l'hydroxyde de calcium ou une quelconque combinaison de ceux-ci, et le diamètre des matériaux de liant est dans la plage de 5 à 100 µm.

2. Composition de béton calcaire activé par un alcali selon la revendication 1, dans laquelle le liant comprend en outre un laitier de haut-fourneau, du métakaolin, du ciment portland ou une quelconque combinaison de ceux-ci.

3. Composition de béton calcaire activé par un alcali selon la revendication 2, dans laquelle le liant comprend au moins l'un des suivants dans les quantités indiquées :
jusqu'à 60 % en poids de laitier de haut-fourneau,
jusqu'à 50 % en poids de métakaolin et
jusqu'à 30 % de ciment portland.

4. Composition de béton calcaire activé par un alcali selon l'une quelconque des revendications précédentes, dans laquelle l'activateur alcalin comprend au moins l'un des suivants dans les quantités indiquées :
de 4 à 15 % en poids de carbonate de potassium,
de 5 à 30 % en poids d'oxyde de calcium et
de 5 à 30 % en poids d'hydroxyde de calcium
les pourcentages en poids étant relatifs au liant à l'exclusion du ciment portland.

5. Composition de béton calcaire activé par un alcali selon l'une quelconque des revendications précédentes, dans laquelle l'activateur alcalin a été ajouté en tant qu'anhydre.

6. Composition de béton calcaire activé par un alcali selon l'une quelconque des revendications 1 à 4, dans laquelle l'activateur alcalin a été ajouté en tant que solution aqueuse.

7. Utilisation d'une composition de béton calcaire activé par un alcali selon l'une quelconque des revendications précédentes dans un moulage de béton.

8. Utilisation d'une composition de béton calcaire activé par un alcali selon l'une quelconque des revendications 1 à 6 dans un moulage de béton sur site.

9. Utilisation d'une composition de béton calcaire activé par un alcali selon l'une quelconque des revendications 1 à 6 dans le moulage d'éléments en béton prémoulés.

10. Utilisation d'une composition de béton calcaire activé par un alcali selon l'une quelconque des revendications 1 à 6 pour fabriquer du béton vibré, du béton sec ou du béton autoplaçant.
